# EUROPEAN PATENT APPLICATION

(11) **EP 4 458 448 A1**
(43) Date of publication of application: **06.11.2024**
(21) Application number: 22915512.2
(22) Date of filing: 28.10.2022
(51) Int. Cl.: B01D 39/16, B24B 57/02

(54) **FILTER MEMBER**

(30) Priority: 28.12.2021 JP 2021214283
(71) Applicant: Roki Techno Co., Ltd., Tokyo 140-8576 (JP)
(72) Inventor: NAGASHIMA, Kyosuke, Tokyo 140-8576 (JP)
(74) Representative: dompatent von Kreisler Selting Werner - Partnerschaft von Patent- und Rechtsanwälten mbB
(86) International application number: PCT/JP2022/040357
(87) International publication number: WO 2023/127279

(57) **Abstract**

Provided is a filter member having a filter that exhibits a long filter life and that can maintain a particle concentration in a particle-containing liquid being filtered. The filter member has a filter that has an opening diameter that is smaller than the diameter of the filtration target contained in the particle-containing liquid. This filter is formed by a carbodiimide compound-treated fiber from an amide-based fiber that contains the amide bond and has a carboxyl group and/or amino group functional group.

## Description

### Technical Field

The present invention relates to a filter member which is used for filtration of a particle-containing liquid.

### Background Art

A polishing liquid consisting of a particle-containing liquid which contains polishing particles including inorganic oxide particles such as silica or metal oxide particles and so on is used for polishing a surface of materials. If the polishing liquid contains larger-particles or contaminants therein, smoothness of the polished surface is influenced badly. Therefore, the polishing liquid has been filtered through a filter that has an opening diameter smaller than a size of a filtration target such as the larger-particles or contaminants contained therein.

With regard to filtration of the above-mentioned polishing liquid, it is proposed that the polishing liquid is filtered through a filter which contains diatomaceous earth cationized with a polyvalent amine compound during a preparation process of the polishing liquid in the below patent document 1. A surface of the cationized diatomaceous earth has a positive zeta potential. And it is proposed that a polishing liquid is filtered through a filter having a positive zeta potential in the below patent document 2. The filter having the positive zeta potential is prepared by treating a filtration material made of acrylate-grafted polyurethane with a cationizing agent such as a polyaluminium chloride or a basic substance having an amino group, and so on, or by immersing a filter made of polypropylene in a polyaluminium chloride solution. And in the below patent document 3, it is disclosed that a polishing liquid is filtered through a filter having a positive zeta potential obtained by cationizing the filter formed by a layer of the filter fabrics of the filter fibers which is made of synthetic fibers such as polyamide fibers. This cationizing-treatment is carried out by adding or immersing a cationic substance containing a cationic group such as an amine (primary amine, secondary amine, tertiary amine) or a quaternary ammonium cation to the filter textile.

### [Prior Art Document]

### [Patent Document]

[Patent Document 1] JP2012-143859A
[Patent Document 2] JP2010-095568A
[Patent Document 3] JP2015-071659A

### Summary of the Invention

### Problems to be Solved by the Invention

By the way, with respect to filtration of a particle-containing liquid including a polishing liquid, when filtering out larger-particles or contaminants contained in the particle-containing liquid having a size larger than the opening diameter of a filter, through the above-mentioned cationizing-treated filter, positively-charged particles having a size smaller than the opening diameter of the filter which has a positive zeta potential can pass through the filter. However, the present inventors have found a problem that particles charged negatively and even having a size smaller than the opening diameter of the filter cannot pass through the filter which has a positive zeta potential, and that causes gradual clogging of the filter, decreasing the particle concentration in the particle-containing liquid being filtered, and shortening a filter life. The same problem mentioned above have also been found in a case when particles are charged positively while a filter is charged negatively.

An object of the present invention to solve the above-mentioned problems is to provide a filter member having a filter that can keep a particle concentration in a particle-containing liquid being filtered, and exhibits a long filter life.

### Means for Solving the Problems

A filter member made to solve the above-mentioned probrems has a filter that has an opening diameter which is smaller than a size of filtration targets contained in a particle-containing liquid, and the filter is formed by a carbodiimide compound-treated fiber made of an amide-based fiber that contains the amide bond, and has a carboxyl group and/or an amino group as a functional group.

The amide-based fiber is preferably a polyamide fiber or a protein fiber, because they contain many carboxyl groups and/or amino groups.

The carbodiimide compound preferably has one or more carbodiimide groups in a molecular chain thereof.

A zeta potential of the carbodiimide compound-treated fiber is preferably shifted toward a positive charge side more than that of an amide-based fiber that contains the amide bond, and has a carboxyl group and/or an amino group as a functional group, because it can prevent clogging of the filter effectively.

### Effects of the Invention

According to the present invention, the filter member can prevent the particles contained in the particle-containing liquid to be filtered from being adsorbed on the filter fiber, thereby suppressing the clogging of the filter. So that, the filter member can keep the particle concentration in the particle-containing liquid being filtered, and exhibits the long filter life.

### Brief Description of Drawings

[Figure 1]

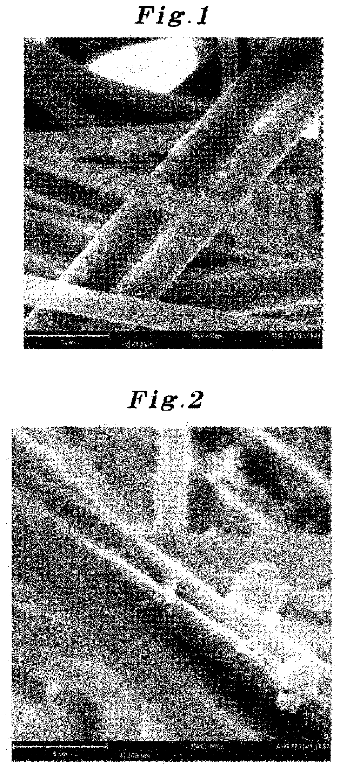

   Figure 1 is an electron micrography showing an adsorption-state of particles on a fiber treated with a carbodiimide compound which forms a filter member that applies the present invention.
[Figure 2]
   Figure 2 is an electron micrography showing an adsorption-state of particles on a fiber untreated with a carbodiimide compound which forms a filter member that does not apply the present invention.

### Embodiments to Implement the Invention

Hereinafter, the present invention is explained in detail, but the scope of the present invention is not limited to the below-described embodiments in any way.

A particle-containing liquid which is directed to the present invention contains particles to be filtered through as well as objects to be filtered out such as larger-particles or contaminants in a solvent such as water. The particles may be inorganic particles or organic particles as long as they can be charged in the particle-containing liquid. Examples of the inorganic particles include inorganic oxides such as silicon dioxide (SiO₂) etc., and metal oxides such as iron oxide (Fe₂O₃) and aluminum oxide (Al₂O₃) etc. According to a document ("Dispersion and Aggregation of Slurry" Nagaoka University of Technology), depending upon the pH value of the liquid which is dispersing the particles, zeta potentials of these oxide particles of silicon dioxide (SiO₂), iron oxide (Fe₂O₃) and aluminum oxide (Al₂O₃) are negative, almost 0 (isoelectric point), and positive, respectively, in the liquid having a pH value of from 6 to 7. The organic particles may be particles from biological products.

The filter which filters the above-mentioned particle-containing liquid is formed by fibers, and has an opening diameter that is smaller than a size of filtration targets such as larger-particles and contaminants contained therein. The filter formed by the fibers includes a filter made of fabrics such as woven fabrics, knitted fabrics, and non-woven fabrics etc., whose openings are smaller than the size of the objects to be filtered out, or a filter made of a plurality of hollow fibers with through-holes on the walls thereof, the opening diameter of which is smaller than the size of the objects to be filtered out. These fibers include a carbodiimide compound-treated fiber made of an amide-based fiber that has the amide bond, and has a carboxyl group and/or an amino group as a functional group.

The amide-based fiber is preferably a polyamide fiber or a protein fiber, because they have many carboxyl groups and/or amino groups. Examples of the polyamide fiber includes fibers selected from nylon 4, nylon 6, nylon 11, nylon 12, nylon 46, nylon 66, nylon 610, nylon MXD6 (polycondensation product of metaxylylenediamine and adipic acid), copolymers thereof, and fibers made of aromatic polyamide. Among them, nylon 6 is preferable. Examples of the protein fiber include wool and silk. It is inferred that depending upon the pH value of the environment of the fiber, before being treated with carbodiimide compound, the zeta potentials of these fibers may be the more negative, the more numbers of acidic functional groups such as carboxyl groups are in the molecular structure. On the other hand, it is also inferred that the zeta potentials of these fibers may be the more positive, the more numbers of basic functional groups such as amino groups are in the molecular structure.

It is preferred that the zeta potential of the amide-based fiber treated with carbodiimide compound is shifted toward a positive charge side more than that of the amide-based fiber untreated with the carbodiimide compound. The above-mentioned "shifting toward the positive charge side" means that a quantity of negative charge of the fiber treated with the carbodiimide compound is reduced comparing to that of the fibers untreated. That is to say, it means that the zeta potential of the fiber treated with the carbodiimide compound is still negative, but shifted in the direction closer to zero charge, zero charge or beyond zero charge to the positive charge side. And it also means that a quantity of positive charge of the fiber treated with the carbodiimide compound is increased comparing to that of the fibers before treatment.

Polycarbodiimide and diisopropylcarbodiimide can be used as the carbodiimide compound to treat the amide-based fiber. As the polycarbodiimide, Carbodilite (registered trademark) V-02, V-10, SV-02, E-02, and E-05 (all trade names) manufactured by Nisshinbo Chemical Inc. can preferably be used. In the treatment of the amide-based fiber with the carbodiimide compound, the amide-based fiber is immersed alone, in the form of a fabric, or in the form of a filter, in a solution of the carbodiimide compound at room temperature or at elevated temperature, and then washed with distilled water and dried.

As regards the fibers treated with the carbodiimide compound, it is presumed that functional groups of carboxyl groups and/or amino groups in the amide-based fibers have reacted with the carbodiimide compound, then making it difficult for the functional groups to dissociate, suppressing a potential change due to the dissociation of the functional groups, and making the zeta potential of the fibers treated with the carbodiimide compound shift toward a positive charge side. In such the fibers treated with the carbodiimide compound, the carbodiimide compound has reacted with the functional groups in the amide-based fibers. Therefore, the state in which the zeta potential of the fibers treated with the carbodiimide compound has been shifted toward a positive charge side can be sufficiently maintained.

Filtering by using the filter formed by the fibers treated with the carbodiimide compound, the difference between the potential of particles to be filtered through in the particle-containing liquid and that of the filter fiber, though depending upon the pH value of the liquid, can be made small. Therefore, it can prevent the decrease in particle concentration of the filtered particle-containing liquid and clogging of the filter, due to particle adsorption on the fibers.

Hereinbefore, the filters have been explained. When a member such as a filter supporting- material is formed by an amide-based resin such as polyamide resin, it is preferable to treat the amide-based resin with the carbodiimide compound since the treatment can prevent the particles in the particle-containing liquid from adsorbing on the member such as the filter supporting- material.

### Embodiments

Hereinafter, examples of the present invention are explained in detail, but the scope of the present invention is not limited to the below-described examples in any way.

### (Example 1)

### 1.Particle-Containing Liquid

Each of the particles shown in Table 1 below was dispersed in an aqueous solution containing a dispersant, at a concentration of 100 ppm for each particle, respectively. The particle-containing liquid was orange colored and had a pH value of 6. The zeta potentials of each particle in the pH 6 solution are also listed in Table 1. The zeta potentials shown in Table 1 are referred from the above-mentioned document ("Dispersion and Aggregation of Slurry" Nagaoka University of Technology).

### [Table 1]

**Table 1**

| Particle | Particle Diameter (nm) | Zeta Potential |
|---|---|---|
| SiO₂ | 50 | Negative |
| Fe₂O₃ | 50-70 | 0 (Isoelectric Point) |
| α-Al₂O₃ | 100 | Positive |

### 2. Filter

### (1) Preparation of Filter

As a filter, a non-woven fabric made of fibers of nylon 6 manufactured by a melt-blown method was used. Weight per unit area and thickness of the non-woven fabric are shown below.
Weight per Unit Area: 50g/m²
Thickness: 0.40mm (Load: 0.07N/cm²)

### (2) Treatment with Carbodiimide Compound

The above non-woven fabric was treated with a carbodiimide compound. The treatment with the carbodiimide compound was carried out in a way in which the non-woven fabric was immersed in an aqueous solution of Carbodilite (registered trademark) V-02 (trade name) manufactured by Nisshinbo Chemical Inc. diluted with water so as to be a final concentration of 0.2% by mass, left for 72 hours at room temperature, after that, washed with water and then dried.

### (3) Measurement of Zeta Potential

### (i) Method of Zeta Potential Measurement for Non-Woven Fabrics

The non-woven fabric to be measured was sealed in a holder equipped with electrodes at both ends, and the potential difference generated when an electrolyte solution was flowed under a constant pressure was measured to calculate a streaming potential. The zeta potential was determined by converting into the obtained streaming potential value using the Helmholtz-Smoluchowski equation.

### (ii) Zeta Potential of Non-woven fabrics

The zeta potentials of the obtained non-woven fabric treated with the carbodiimide compound and the non-woven fabric untreated with the carbodiimide compound were measured by following the method of zeta potential measurement described above. As a result, the zeta potential of the non-woven fabric treated with the carbodiimide compound was -0.8 mV, while the zeta potential of the non-woven fabric untreated with the carbodiimide compound was -12.5 mV. It is understood that the zeta potential of the non-woven fabric was shifted toward a positive charge side by the treatment with the carbodiimide compound.

### 3. Adsorption Test

In the above-mentioned particle-containing liquid which is an aqueous solution containing 0.0025% by volume of polyethylene glycol mono-p-isooctylphenyl ether (polyoxyethylene octylphenyl ether) as a dispersant in water, in which the particles shown in Table 1 are dispersed therein, the non-woven fabric treated with the carbodiimide compound was immersed, and shaken for 3 hours, and then taken out. When observed the appearance of the taken out non-woven fabric and the particle-containing liquid, it is found that the particle-containing liquid was orange-colored, which looked almost the same as the particle-containing liquid before the adsorption test, and a white part was observed on the non-woven fabric as well as on the non-woven fabric before the adsorption test. Here, a SEM photograph (magnification 10,000) taken with a scanning electron microscope (SEM) of the taken-out non-woven fabric is shown in Fig. 1. As shown in the SEM photograph of Fig. 1, almost no particle has been adsorbed on the non-woven fabric fibers. Furthermore, regarding the taken out non-woven fabric, a result of an elemental analysis of the particles adsorbed on the non-woven fabric fibers by using an energy dispersive X-ray spectrometer (SEM-EDS) installed in the above scanning electron microscope (SEM) is shown in Table 2. Based on the result of the elemental analysis, the amount of particles adsorbed on the non-woven fabric fibers was calculated and is also shown in Table 2. The adsorption amount is indicated as the ratio of the total particle components (Si, Al, Fe) to the elementally analyzed carbon components.

A non-woven fabric untreated with the carbodiimide compound was also subjected to an adsorption test similarly. The entire surface of the taken-out non-woven fabric was orange-colored, and the orange color of the particle-containing liquid has turned into extremely pale. A SEM photograph (magnification 10,000) taken with a scanning electron microscope (SEM) of this non-woven fabric is shown in Fig.2. As shown in the SEM photograph of Fig.2, a lot of particles have been adsorbed on the non-woven fabric fibers. Furthermore, regarding this non-woven fabric, the result of elemental analysis of the particles adsorbed on the non-woven fabric fibers by SEM-EDS and the adsorption amount calculated based on the elemental analysis are also shown in Table 2.

### [Table 2]

**Table 2**

| Carbodiimide Compound-Treatment | Element Analysis (mass%) | | Adsorption Amount (%) |
|---|---|---|---|
| Treated | C | 98.9 | 1.0 |
| | Fe | 0.2 | |
| | Al | 0.5 | |
| | Si | 0.3 | |
| Untreated | C | 86.7 | 13.3 |
| | Fe | 4.7 | |
| | Al | 4.5 | |
| | Si | 4.1 | |

As shown in Table 2, the amount of particles adsorbed on the filter fibers was reduced by the treatment with the carbodiimide compound.

### (Example 2)

The zeta potentials of the non-woven fabrics treated with the carbodiimide compound were measured in the same manner as in Example 1, except that the carbodiimide compound used in Example 1 was changed to Carbodilite (registered trademark) V-10, SV-02, E-02, and E-05 (all trade names) manufactured by Nisshinbo Chemical Inc., and diisopropylcarbodiimide (30% ethanol solution), respectively. The results are shown in Table 3. Furthermore, in the same manner as in Example 1, the adsorption amounts of particles adsorbed on the non-woven fabric fibers by immersion-treatment in the particle-containing liquid were calculated, and are listed in Table 3.

### [Table 3]

**Table 3**

| Carbodiimide Compound | Zeta Potential (mV) | Adsorption Amount (%) |
|---|---|---|
| V-10 | +1.9 | 0.2 |
| SV-02 | -0.7 | 0.2 |
| E-02 | +34.7 | 2.4 |
| E-05 | +5.4 | 1.8 |
| Diisopropylcarbodiimide | -3.1 | 5.7 |

As shown in Table 3, even if the carbodiimide compound has been changed to other ones, the zeta potentials of the filter treated with the carbodiimide compound were able to be shifted toward a positive charge side, and the adsorption amounts of particles were also reduced.

### (Example 3)

As a filter, a non-woven fabric made of fibers of nylon 66 was used and treated with a carbodiimide compound. The treatment with the carbodiimide compound was carried out in a way in which the non-woven fabric was immersed in an aqueous solution of Carbodilite (registered trademark) V-02 (trade name) manufactured by Nisshinbo Chemical Inc. diluted with water so as to be a final concentration of 0.2% by mass, left for 72 hours at room temperature, after that, washed with water and then dried.

The zeta potentials of the obtained non-woven fabric treated with the carbodiimide compound and the non-woven fabric untreated with the carbodiimide compound were measured. The zeta potential of the non-woven fabric treated with the carbodiimide compound was -3.9 mV, while the zeta potential of the non-woven fabric untreated with the carbodiimide compound was -17.3 mV. It is understood that the zeta potential of the non-woven fabric was shifted toward a positive charge side by the treatment with the carbodiimide compound. An adsorption test on a non-woven fabric made of fibers of nylon 66 has not been conducted yet.

### (Example 4)

The zeta potential of a woven fabric treated with the carbodiimide compound was measured in the same manner as in Example 1, except that the non-woven fabric made of fibers of nylon 6 used in Example 1 was changed to a woven fabric made of silk. The result is shown in Table 4. Furthermore, in the same manner as in Example 1, the adsorption amount of particles adsorbed on the woven fabric fibers by immersion-treatment in a particle-containing liquid was calculated, and is also listed in Table 4. Furthermore, the zeta potential of the woven fabric untreated with the carbodiimide compound was measured similarly, and is also listed in Table 4. Furthermore, in the same manner as in Example 1, the woven fabrics were subjected to an adsorption test. Regarding the taken-out woven fabrics, the result of elemental analysis of the particles adsorbed on the woven fabric fibers by SEM-EDS and the adsorption amount calculated based on the elemental analysis are also shown in Table 4.

### [Table 4]

**Table 4**

| Carbodiimide Compound-Treatment | Zeta Potential (mV) | Adsorption Amount (%) |
|---|---|---|
| Treated | +2.9 | 1.5 |
| Untreated | -10.3 | 1.8 |

As shown in Table 4, regarding the protein fiber as well, the zeta potential was shifted toward a positive charge side, and the adsorption amount of particles was reduced by the treatment with the carbodiimide compound.

### Industrial Applicability

A filter member according to the present invention can preferably be used for filtering a particle-containing liquid such as a polishing liquid.

## Claims

1. A filter member having a filter that has an opening diameter which is smaller than a size of filtration targets contained in a particle-containing liquid,
and the filter being formed by a carbodiimide compound-treated fiber made of an amide-based fiber that contains the amide bond, and has a carboxyl group and/or an amino group as a functional group.

2. The filter member according to claim1, wherein the amide-based fiber is a polyamide fiber or a protein fiber.

3. The filter member according to claim1 or 2, wherein the carbodiimide compound has one or more carbodiimide groups in a molecular chain thereof.

4. The filter member according to any one of claims1 to 3, wherein a zeta potential of the carbodiimide compound-treated fiber is shifted toward a positive charge side more than that of the amide-based fiber that contains the amide bond, and has a carboxyl group and/or an amino group as a functional group.
